# EUROPÄISCHE PATENTANMELDUNG

(11) **EP 1 808 336 A1**
(43) Veröffentlichungstag der Anmeldung: **18.07.2007**
(21) Anmeldenummer: 07000434.6
(22) Anmeldetag: 10.01.2007
(51) Int. Cl.: B60R 7/06, B60R 25/04, B60R 25/00

(54) **Zugangskontrolleinrichtung für Kraftfahrzeuge**

(30) Priorität: 11.01.2006 DE 102006001410
(71) Anmelder: paragon AG, 33129 Delbrück (DE)
(72) Erfinder: Röscheisen, Daniel, 33378 Rheda-Wiedenbrück (DE); Karabas, Fotios, 70567 Stuttgart (DE); Scheibel, Christoph Dipl.-Ing., 33604 Bielefeld (DE)
(74) Vertreter: Lelgemann, Karl-Heinz

(57) **Zusammenfassung**

Eine Zugangskontrolleinrichtung für ein Kraftfahrzeug beinhaltet einen Fahrzeugschlüssel (11), mittels dessen zumindest ein Türschloss des Kraftfahrzeugs fernbetätigt ent- und verriegelbar ist.

Um einem Personenkreis Zugang zum Kraftfahrzeug zu gewähren, dessen Anzahl die Anzahl der vorhandenen Fahrzeugschlüssel bei weitem übersteigt, wird vorgeschlagen, dass der Fahrzeugschlüssel (11) der Zugangskontrolleinrichtung so im Innenraum des Kraftfahrzeugs aufbewahrbar ist, dass er mittels einer Fernbedienungseinrichtung der Zugangskontrolleinrichtung von außerhalb des Kraftfahrzeugs her zur Ent- und/oder Verriegelung des zumindest einen Türschlosses in Betrieb setzbar ist.

## Beschreibung

Die Erfindung bezieht sich auf eine Zugangskontrolleinrichtung für ein Kraftfahrzeug, mit einem Fahrzeugschlüssel, mittels dem zumindest ein Türschloss des Kraftfahrzeugs fernbetätigt ent- und verriegelbar ist.

Eine derartige Zugangskontrolleinrichtung für ein Kraftfahrzeug ist aus der DE 103 61 115 A1 bekannt.

Aus der DE 10 2004 024 353 A1 ist ein sogenanntes schlüsselloses Smart-Start-System bekannt, zu dem ein Aufnahmebehälter gehört, der innerhalb des Kraftfahrzeugs montiert ist und zwischen einer geschlossenen und einer offenen Position verstellbar ist. Dieser Aufnahmebehälter steht mit einem Zündungskontroller in Verbindung, wobei zu diesem Aufnahmebehälter ein Schubladenelement gehört, in dem ein elektronisches Transmitterelement platzierbar ist, welches mit dem Zündungskontroller kommunizieren kann.

Fahrzeugschlüssel, mittels denen einzelne Türschlösser des Kraftfahrzeugs oder eine Zentralverrieglung desselben fernbetätigt bedienbar ist, sind seit vielen Jahren in Gebrauch und erfreuen sich einer zunehmenden Beliebtheit. Mit einem Kraftfahrzeug werden üblicherweise lediglich zwei bis drei Fahrzeugschlüssel ausgeliefert. Hierdurch ist der Personenkreis, dem ohne großen logistischen Aufwand Zugang zu dem betreffenden Kraftfahrzeug gewährt werden kann, vergleichsweise eingeschränkt. Insbesondere bei der Ausleihung von Fahrzeugen, beim Fahrzeug-Sharing etc., bedarf es eines hohen logistischen Aufwands, um trotz der vergleichsweise geringen Anzahl üblicherweise vorhandener Fahrzeugschlüssel einem größeren Personenkreis mit einem vergleichsweise geringen logistischen Aufwand die Nutzung des betreffenden Kraftfahrzeugs zu ermöglichen.

Der Erfindung liegt die Aufgabe zugrunde, eine Zugangskontrolleinrichtung für Kraftfahrzeuge zu entwickeln, mittels der einem größeren Personenkreis Zugang zu dem betreffenden Kraftfahrzeug gewährt werden kann, ohne dass eine oftmalige Weitergabe oder gar eine Vervielfältigung des bzw. der Fahrzeugschlüssel des betreffenden Kraftfahrzeugs erforderlich wäre.

Diese Aufgabe wird erfindungsgemäß dadurch gelöst, dass der Fahrzeugschlüssel der Zugangskontrolleinrichtung so im Innenraum des Kraftfahrzeugs aufbewahrbar ist, dass er mittels einer Fernbedienungseinrichtung der Zugangskontrolleinrichtung von außerhalb des Kraftfahrzeugs her zur Ent- und/oder Verriegelung des zumindest einen Türschlosses in Betrieb setzbar ist. Hierdurch kann jeder Person, die autorisiert ist, die Fernbedienungseinrichtung zu bedienen, Zugang zu dem betreffenden Kraftfahrzeug gewährt werden, ohne dass die betreffende Person im Besitz des dem jeweiligen Kraftfahrzeug zugeordneten Fahrzeugschlüssels sein müsste.

Gemäß einer vorteilhaften Ausführungsform wird der Fahrzeugschlüssel in einem Fach im Kraftfahrzeug aufbewahrt, in dem er zwecks Ent- und/oder Verriegelung des zumindest einen Türschlosses des Kraftfahrzeugs in Betrieb setzbar ist.

Das Fach ist zweckmäßigerweise als Schubladenfach ausgebildet, mit einer Schublade, in der der Fahrzeugschlüssel lagerbar und mittels der der Fahrzeugschlüssel in das Schubladenfach hinein und aus diesem heraus bewegbar ist, und einer Betätigungseinheit, die mittels der Fernbedienungseinrichtung der Zugangskontrolleinrichtung zur Inbetriebsetzung des in der Schublade bzw. im Schubladenfach befindlichen Fahrzeugschlüssels zwecks Ent- und/oder Verriegelung des Türschlosses in Betrieb setzbar ist. Hierdurch ist es möglich, den Fahrzeugschlüssel diebstahlsicher innerhalb des Kraftfahrzeugs aufzubewahren.

Vorteilhaft weist die Schublade einen Einleger für den Fahrzeugschlüssel auf, mittels dem der Fahrzeugschlüssel so in der Schublade gehaltert ist, dass der Ent- bzw. der Verriegelung des Türschlosses des Kraftfahrzeugs dienende Tastschalter des Fahrzeugschlüssels mittels der Betätigungseinheit betätigbar sind. Der entsprechende Einleger kann je Kraftfahrzeug- bzw. Fahrzeugschlüsseltyp gestaltet werden.

Die Betätigungseinheit ist vorteilhaft mittels eines Linearantriebs bewegbar, wobei mittels eines derartigen Linearantriebs mit einem vergleichsweise geringen technischkonstruktiven Aufwand die Tastschalter des Fahrzeugschlüssels zuverlässig betätigbar sind. Hierbei ist zu beachten, dass zur Betätigung derartiger Tastschalter vergleichsweise hohe Kräfte erforderlich sind.

Gemäß einer weiteren vorteilhaften Ausführungsform der erfindungsgemäßen Zugangskontrolleinrichtung ist die Schublade mittels einer vorzugsweise als Linearantrieb ausgebildeten Antriebseinheit im Schubladenfach beweglich, wobei der den Fahrzeugschlüssel halternde Einleger in einer ersten bzw. zweiten Stellung der Schublade so positioniert ist, dass mittels der Betätigungseinheit der der Entriegelung bzw. der Verriegelung des Türschlosses dienende Tastschalter in Betrieb setzbar ist, wobei vorteilhaft diejenige Stellung der Schublade, in der der der Entriegelung dienende Tastschalter des Fahrzeugschlüssels betätigbar ist, der Schließstellung der Schublade entspricht.

Um eine Zugangsberechtigung für das betreffende Kraftfahrzeug nur autorisierten Personen zu ermöglichen, sollte die Identifizierung der autorisierten Person über eine kryptologisch gesicherte Schnittstelle erfolgen. Entsprechend weist gemäß einer vorteilhaften Ausführungsform die Fernbedienungseinrichtung einen Identifikationsgeber bzw. Transponder auf, der sich bei einem berechtigten Nutzer des Kraftfahrzeugs bzw. bei einer hierzu autorisierten Person befindet, wobei des Weiteren zur Fernbedienungseinrichtung eine Empfangseinheit gehört, die fest im Kraftfahrzeug installiert ist. Der Transponder bzw. der Identifikationsgeber und die Empfangseinheit können in einem gesicherten Übertragungsverfahren miteinander kommunizieren.

Die Übertragung zwischen dem Transponder einerseits und der Empfangseinheit andererseits kann zweckmäßigerweise über ein Magnetfeld, Infrarot oder Funk realisiert sein.

Eine Überprüfung ist in vergleichsweise wenig aufwendiger Weise möglich, wenn eine Autorisierungsüberprüfungseinheit vorgesehen ist, die in einem Steuergerät der Zugangskontrolleinrichtung oder in einer externen Servereinheit angeordnet bzw. ausgebildet ist und mittels der die Autorisierung des Identifikationsgebers bzw. Transponders überprüfbar ist.

Vorteilhaft wird mittels der Empfangseinheit nach erfolgreicher Überprüfung der Autorisierung des Identifikationsgebers bzw. Transponders der vorzugsweise elektromotorische Linearantrieb der Betätigungseinheit zwecks Entriegelung des zumindest einen Türschlosses und danach die Antriebseinheit der Schublade zwecks Freigabe des Fahrzeugschlüssels in Betrieb gesetzt. Hierdurch steht der autorisierten Person bzw. dem Kraftfahrzeugnutzer der Fahrzeugschlüssel zur Betätigung der Zündung zur Verfügung, wenn die genannte Person hinter dem Steuer Platz genommen hat.

Gemäß einer weiteren vorteilhaften Ausführungsform der erfindungsgemäßen Zugangskontrolleinrichtung sind mittels der Empfangseinheit nach Außerbetriebsetzung des Kraftfahrzeugs und Zurücklegen des Fahrzeugschlüssels in den Einleger der Schublade deren Antriebseinheit zum Einfahren der Schublade in das Schubladenfach und, in einer entsprechenden Stellung der Schublade, die Betätigungseinheit zwecks Verriegelung des Türschlosses in Betrieb setzbar. Nachdem in der entsprechenden Stellung die Schublade kurzfristig anhält und während dieses Zeitraums der der Verriegelung des Türschlosses dienende Tastschalter des Fahrzeugschlüssels mittels der Betätigungseinheit betätigt worden ist, wird die Schublade mittels der Antriebseinheit in die vollständig in das Schubladenfach eingefahrene Stellung gestellt.

Das Schubladenfach kann vorzugsweise als Schlüsseltresor aus einem Metallgehäuse ausgebildet sein, wodurch jedweder unbefugter Zugriff auf den Fahrzeugschlüssel erschwert, wenn nicht verhindert werden kann.

Hierzu ist es vorteilhaft, wenn eine Frontplatte der Schublade bei in das Schubladenfach eingefahrener Stellung derselben mit einer Frontplatte des als Metallgehäuse ausgebildeten Schubladenfachs fluchtet. Hierdurch werden Versuche zur unbefugten Öffnung des Schlüsseltresors erheblich erschwert.

Um die erfindungsgemäße Zugangskontrolleinrichtung quasi universell einsetzen zu können, ist es vorteilhaft, wenn in der Schublade derselben Einleger für Fahrzeugschlüssel unterschiedlicher Kraftfahrzeugtypen aufnehmbar sind.

Zur weiteren Erhöhung der Sicherheit der erfindungsgemäßen Zugangskontrolleinrichtung ist die Antriebseinheit der Schublade in deren eingefahrener Stellung verriegelbar ausgestaltet.

Die Position bzw. Stellung der Schublade innerhalb des Schubladenfachs lässt sich vorteilhaft mittels Hall-Schaltern bzw. Magnetfeldsensoren erfassen.

Die Betriebsspannung der elektrischen, elektromotorischen und elektromechanischen Bauteile der erfindungsgemäßen Zugangskontrolleinrichtung beträgt vorteilhaft 12 VDC.

Im Folgenden wird die Erfindung anhand von Ausführungsformen unter Bezugnahme auf die Zeichnung näher erläutert.

Es zeigen:
- Figur 1: eine Seitenansicht einer Ausführungsform eines Fachs einer erfindungsgemäßen Zugangskontrolleinrichtung im eingefahrenen Zustand; und
- Figur 2: eine Vorderansicht der in Figur 1 gezeigten Ausführungsform des Fachs der erfindungsgemäßen Zugangskontrolleinrichtung unter Weglassung der Frontwandungen.

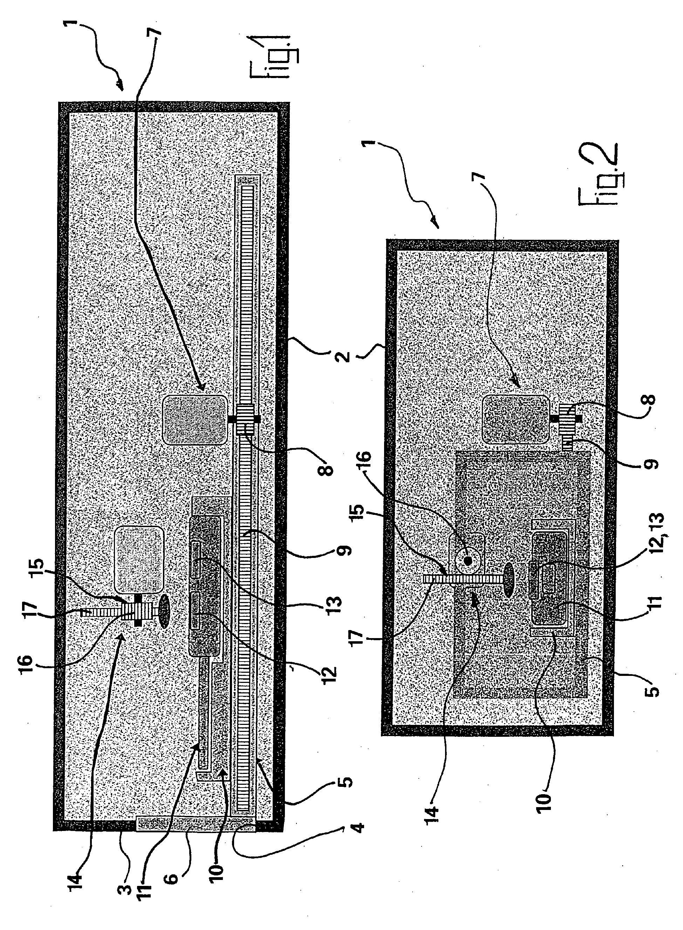

Ein in den Figuren 1 und 2 in Seiten- und Frontansicht dargestelltes Fach 1 ist wesentlicher Bestandteil einer Ausführungsform einer erfindungsgemäßen Zugangskontrolleinrichtung für ein Kraftfahrzeug.

Das Fach 1 ist an einer geeigneten Position in der Inneneinrichtung eines Kraftfahrzeugs angeordnet. Bei dem in den Figuren 1 und 2 dargestellten Ausführungsbeispiel ist das Fach als Schubladenfach 1 ausgebildet, hat ein robustes Metallgehäuse 2 und kann beispielsweise aus Aluminium hergestellt sein. Die Farbe des Metallgehäuses 2 ist üblicherweise an die Ausstattung des Kraftfahrzeuginnenraums angepasst.

Das Schubladenfach 1 hat im Bereich seiner Frontplatte 3 eine Durchbrechung 4, die in der in Figur 1 gezeigten Stellung einer Schublade 5 eine Frontplatte 6 dieser Schublade 5 angeordnet ist. In Figur 1 befindet sich die Schublade 5 in ihrer in das Schubladenfach 1 vollständig eingefahrenen Stellung, d.h. in ihrer Schließstellung.

Innerhalb des Schubladenfachs 1 ist zur Verstellung der Schublade 5 eine Antriebseinheit 7 vorgesehen, die mittels eines Antriebsritzels 8 eine an der Schublade 5 vorgesehene Zahnstange 9 und damit die Schublade 5 hin und her bewegen kann.

Auf dem Boden der Schublade 5 ist ein Einleger 10 angebracht, der hinsichtlich seiner Formgebung an einen Fahrzeugschlüssel 11 angepasst ist, wobei je nach Kraftfahrzeugtyp und entsprechendem Fahrzeugschlüssel 11 unterschiedliche Ausgestaltungen des Einlegers 10 möglich sind.

Der Fahrzeugschlüssel 11 hat einen ersten Tastschalter 12, mittels dem fernbetätigt ein Türschloss des Kraftfahrzeugs entriegelbar ist. Des Weiteren hat der Fahrzeugschlüssel 11 einen zweiten Tastschalter 13, mittels dem das Türschloss verriegelbar ist. Selbstverständlich können mittels ein und desselben Tastschalters 12 bzw. 13 auch mehrere Türschlösser bzw. Klappenschlösser etc. des Kraftfahrzeugs ent- bzw. verriegelt werden. Die Ver- bzw. Entriegelung mittels des Fahrzeugschlüssels 11 erfolgt hierbei jeweils fernbetätigt.

Innerhalb des Schubladenfachs 1 ist oberhalb derjenigen Position, die der Einleger 10 und der in ihm befindliche Fahrzeugschlüssel 11 im in das Schubladenfach 1 eingefahrenen Zustand der Schublade 5 einnimmt, eine Betätigungseinheit 14 angeordnet. Die Betätigungseinheit 14 wird durch einen Linearantrieb 15, der ebenfalls durch ein Antriebsritzel 16 und eine Zahnstange 17 realisiert ist, senkrecht zur Bewegungsrichtung der Schublade 5 bewegt.

Bei der in das Schubladenfach 1 eingefahrenen Position der Schublade 5 ist die Betätigungseinheit 14 so angeordnet, dass bei ihrer Inbetriebsetzung der eine Entriegelung des Fahrzeugschlosses bewirkende Tastschalter 12 des Fahrzeugschlüssels in Betrieb gesetzt wird. Hierdurch kann bei im Schubladenfach 1 und damit im Innenraum des Kraftfahrzeugs befindlichem Fahrzeugschlüssel 11 der Zugang zum Innenraum des Kraftfahrzeugs durch Entriegelung des bzw. der Türschlösser freigegeben werden.

Um diesen Vorgang auslösen zu können, ist die mit dem Schubladenfach 1 ausgerüstete Zugangskontrolleinrichtung mit einer Fernbedienungseinrichtung versehen. Zu dieser Fernbedienungseinrichtung gehört ein bei der zur Kraftfahrzeugnutzung autorisierten Person befindlicher Identifikationsgeber bzw. Transponder und eine innerhalb des Kraftfahrzeugs bzw. innerhalb dessen Innenraums vorgesehene Empfangseinheit, die in geeigneter Weise mit der Antriebseinheit 7 der Schublade 5 bzw. der Betätigungseinheit 14 zusammen wirkt. Die physikalische Übertragung zwischen der in den Figuren nicht gezeigten Empfangseinheit und dem Identifikationsgeber bzw. Transponder erfolgt drahtlos über ein Magnetfeld, Infrarot oder Funk. Nach der Identifizierung durch die im Innenraum des Kraftfahrzeugs vorgesehene Empfangseinheit wird die Autorisierung des Identifikationsgebers bzw. Transponders und damit die der entsprechenden Person überprüft. Diese Überprüfung findet entweder direkt in einem Steuergerät der Zugangskontrolleinrichtung oder - alternativ- in einem externen Server statt.

Falls die betreffende Person befugt ist, das mit der Zugangskontrolleinrichtung versehene Kraftfahrzeug zu benutzen, wird automatisch die Betätigungseinheit 14 in Betrieb gesetzt, die den der Entriegelung des bzw. der Türschlösser zugeordneten Tastschalter 12 des Fahrzeugschlüssels 11 betätigt. Das Türschloss bzw. die Türschlösser des Kraftfahrzeugs werden entriegelt, so dass die mit dem Identifikationsgeber bzw.

Transponder ausgerüstete Person Zugang zum Innenraum des Kraftfahrzeugs erhält. Des Weiteren wird die Antriebseinheit 7 in Betrieb gesetzt, die die Schublade 5 aus ihrer in Figur 1 gezeigten Schließstellung in ihre in den Figuren nicht gezeigte Freigabestellung verbringt, in der die genannte Person den Fahrzeugschlüssel 11 aus dem Einleger 10 bzw. aus der Schublade 5 entnehmen kann. Die genannte Person verfügt nun über den auch der Zündung des Kraftfahrzeugs dienenden Fahrzeugschlüssel 11.

Sofern die genannte Person nach Benutzung des Kraftfahrzeugs dieses verlassen und für jemand anders zugriffsbereit zurücklassen will, wird der Fahrzeugschlüssel 11 zurück in den Einleger 10 bzw. in die Schublade 5 gelegt. Auf ein entsprechendes Signal des Identifikationsgebers bzw. des Transponders, der sich mit der genannten Person bereits außerhalb des Kraftfahrzeugs befindet, wird die Schublade 5 aus ihrer das Einlegen des Fahrzeugschlüssels 11 in den Einleger 10 ermöglichenden Position in das Schubladenfach 1 zurückgefahren, wobei die Schublade zunächst in einer Zwischenstellung zum Halten kommt, in der durch entsprechende Ansteuerung der Betätigungseinheit 14 der der Verriegelung des zumindest einen Türschlosses des Kraftfahrzeugs dienende zweite Tastschalter 13 betätigbar ist. Auf die entsprechende Betätigung des zweiten Tastschalters 13 hin wird das zumindest eine Türschloss des Kraftfahrzeugs verriegelt, wonach durch die Antriebseinheit 7 die Schublade 5 in die in Figur 1 gezeigte Schließstellung verstellt wird. In der Schließstellung der Schublade 5 fluchten deren Frontplatte 6 und die Frontplatte 3 des Schubladenfachs 1.

Sowohl die Antriebseinheit 7 der Schublade 5 als auch der Linearantrieb 15 der Betätigungseinheit 14, die den Tastschaltern 12, 13 des Fahrzeugschlüssels 11 zugeordnet ist, können elektromotorisch ausgebildet sein. Ihre Inbetriebsetzung ist durch die Empfangseinheit der Fernbedienungseinrichtung möglich.

Die Antriebseinheit 7 ist so ausgestaltet, dass die Schublade 5 in ihrer in das Schubladenfach 1 bzw. in das Metallgehäuse 2 vollständig eingefahrenen Position, die in Figur 1 gezeigt ist, verriegelbar ist. Auch die Verriegelung bzw. Entriegelung der Antriebseinheit 7 geschieht durch eine entsprechende Signalgebung der innerhalb des Kraftfahrzeugs fest angeordneten Empfangseinheit der Fernbedienungseinrichtung.

Zur Erfassung der Position der Schublade 5 im Schubladenfach können übliche Hall-Schalter bzw. Magnetfeldsensoren vorgesehen sein, die entsprechende Positionssignale an das mit der Antriebseinheit 7 der Schublade 5 bzw. der Betätigungseinheit 14 für die Tasterschalter 12, 13 des Fahrzeugschlüssels 11 zusammen wirkende Steuergerät anlegen.

Die Betriebsspannung der elektrischen bzw. elektromotorischen und elektromechanischen Bauteile der vorstehend geschilderten erfindungsgemäßen Zugangskontrolleinrichtung beträgt 12 VDC.

## Patentansprüche

1. Zugangskontrolleinrichtung für ein Kraftfahrzeug, mit einem Fahrzeugschlüssel (11), mittels dem zumindest ein Türschloss des Kraftfahrzeugs fernbetätigt ent- und verriegelbar ist, **dadurch gekennzeichnet, dass** der Fahrzeugschlüssel (11) der Zugangskontrolleinrichtung so im Innenraum des Kraftfahrzeugs aufbewahrbar ist, dass er mittels einer Fernbedienungseinrichtung der Zugangskontrolleinrichtung von außerhalb des Kraftfahrzeugs her zur Ent- und/oder Verriegelung des zumindest einen Türschlosses in Betrieb setzbar ist.

2. Zugangskontrolleinrichtung nach Anspruch 1, bei der der Fahrzeugschlüssel (11) in einem Fach (1) im Kraftfahrzeug aufbewahrbar ist, in dem er zwecks Ent- und/oder Verriegelung des zumindest einen Türschlosses des Kraftfahrzeugs in Betrieb setzbar ist.

3. Zugangskontrolleinrichtung nach Anspruch 2, bei der das Fach als Schubladenfach (1) ausgebildet ist, mit einer Schublade (5), in der der Fahrzeugschlüssel (11) lagerbar und mittels der der Fahrzeugschlüssel (11) in das Schubladenfach (1) hinein und aus diesem heraus bewegbar ist, und einer Betätigungseinheit (14), die mittels der Fernbedienungseinrichtung der Zugangskontrolleinrichtung zur Inbetriebsetzung des in der Schublade (5) oder im Schubladenfach (1) befindlichen Fahrzeugschlüssels (11) zwecks Ent- und/oder Verriegelung des Türschlosses in Betrieb setzbar ist.

4. Zugangskontrolleinrichtung nach Anspruch 3, deren Schublade (5) einen Einleger (10) für den Fahrzeugschlüssel (11) aufweist, mittels dem der Fahrzeugschlüssel (11) so in der Schublade (5) gehaltert ist, dass der Ent- oder der Verriegelung des Türschlosses des Kraftfahrzeugs dienende Tastschalter (12, 13) des Fahrzeugschlüssels (11) mittels der Betätigungseinheit (14) betätigbar sind.

5. Zugangskontrolleinrichtung nach Anspruch 3 oder 4, bei der die Betätigungseinheit (14) mittels eines Linearantriebs (15) bewegbar ist.

6. Zugangskontrolleinrichtung nach Anspruch 4 oder 5, bei der die Schublade (5) mittels einer vorzugsweise als Linearantrieb ausgebildeten Antriebseinheit (7) im Schubladenfach (1) beweglich ist, wobei der den Fahrzeugschlüssel (11) halternde Einleger (10) in einer ersten oder zweiten Stellung der Schublade (5) so positioniert ist, dass mittels der Betätigungseinheit (14) der der Entriegelung oder der der Verriegelung des Türschlosses dienende Tastschalter (12, 13) in Betrieb setzbar ist.

7. Zugangskontrolleinrichtung nach Anspruch 6, bei der die erste Stellung der Schublade (5) ihrer Schließstellung entspricht.

8. Zugangskontrolleinrichtung nach einem der Ansprüche 1 bis 7, bei der die Fernbedienungseinrichtung einen Identifikationsgeber oder Transponder, der sich bei einem Nutzer des Kraftfahrzeugs befindet, und eine fest im Kraftfahrzeug installierte Empfangseinheit aufweist, die in einem gesicherten Übertragungsverfahren kommunizieren können.

9. Zugangskontrolleinrichtung nach Anspruch 8, bei der die Übertragung zwischen Transponder und Empfangseinheit über ein Magnetfeld, Infrarot oder Funk realisierbar ist.

10. Zugangskontrolleinrichtung nach Anspruch 8 oder 9, mit einer Autorisierungsüberprüfungseinheit, die in einem Steuergerät der Zugangskontrolleinrichtung oder in einer externen Servereinheit angeordnet oder ausgebildet ist und mittels der die Autorisierung des Identifikationsgebers oder Transponders überprüfbar ist.

11. Zugangskontrolleinrichtung nach Anspruch 10, bei der mittels der Empfangseinheit nach erfolgreicher Überprüfung der Autorisierung des Identifikationsgebers oder Transponders der vorzugsweise elektromotorische Linearantrieb (15) der Betätigungseinheit (14) zwecks Entriegelung des zumindest einen Türschlosses und danach die Antriebseinheit (7) der Schublade (5) zwecks Freigabe des Fahrzeugschlüssels (11) in Betrieb setzbar sind.

12. Zugangskontrolleinrichtung nach einem der Ansprüche 8 bis 11, bei der mittels der Empfangseinheit nach Außerbetriebsetzung des Kraftfahrzeugs und Zurücklegen des Fahrzeugschlüssels (11) in den Einleger (10) der Schublade (5) deren Antriebseinheit (7) zum Einfahren der Schublade (5) in das Schubladenfach (1) und, in einer entsprechenden Stellung der Schublade (5), die Betätigungseinheit (14) zwecks Verriegelung des Türschlosses in Betrieb setzbar sind.

13. Zugangskontrolleinrichtung nach einem der Ansprüche 3 bis 12, deren Schubladenfach (1) als Schlüsseltresor aus einem Metallgehäuse (2) ausgebildet ist.

14. Zugangskontrolleinrichtung nach einem der Ansprüche 3 bis 13, bei der eine Frontplatte (6) der Schublade (5) bei in das Schubladenfach (1) eingefahrener Stellung derselben mit einer Frontplatte (3) des als Metallgehäuse (2) ausgebildeten Schubladenfachs (1) fluchtet.

15. Zugangskontrolleinrichtung nach einem der Ansprüche 3 bis 14, in deren Schublade (5) Einleger (10) für Fahrzeugschlüssel (11) unterschiedlicher Kraftfahrzeugtypen aufnehmbar sind.

16. Zugangskontrolleinrichtung nach einem der Ansprüche 6 bis 15, bei der die Antriebseinheit (7) der Schublade (5) in deren eingefahrener Stellung verriegelbar ist.

17. Zugangskontrolleinrichtung nach einem der Ansprüche 3 bis 16, bei der zur Erfassung der Stellung der Schublade (5) im Schubladenfach (1) Hall-Schalter oder Magnetfeldsensoren vorgesehen sind.

18. Zugangskontrolleinrichtung nach einem der Ansprüche 1 bis 17, bei der die Betriebsspannung ihrer elektrischen oder elektromotorischen und elektromechanischen Bauteile 12 VDC beträgt.
